# EUROPÄISCHE PATENTANMELDUNG

(11) **EP 1 944 181 A2**
(43) Veröffentlichungstag der Anmeldung: **16.07.2008**
(21) Anmeldenummer: 07021156.0
(22) Anmeldetag: 30.10.2007
(51) Int. Cl.: B60J 10/00

(54) **Dichtungsprofil und Vorrichtung zu seiner Befestigung an einem Flansch**

(30) Priorität: 13.01.2007 DE 102007001967
(71) Anmelder: GM Global Technology Operations, Inc., Detroit, MI 48265-3000 (US)
(72) Erfinder: Alhof, Michael, 65439 Flörsheim (DE); Priess, Klaus-Albert, 55129 Mainz (DE); Wagner, Thomas, 65451 Kelsterbach (DE)
(74) Vertreter: Daniel, Ulrich W.P.

(57) **Zusammenfassung**

Die Erfindung betrifft eine Vorrichtung zur dauerhaften Befestigung eines mit einer Metallverstärkung (8) ausgestatteten Dichtungsprofils (5) auf einen Flansch (7) mittels Rollformens, umfassend eine erste und eine zweite drehbare Rolle (3,4) mit gemeinsamer Drehachse, bei der die Rollen auf beiden Seiten eines auf einen Flansch (7) einer Karosserieöffnung aufgesteckten Dichtungsprofils positionierbar sind, bei der für die erste Rolle (3) ein Rollenantrieb (9) vorgesehen ist und die zweite Rolle (4) als Mitnehmerrolle ausgebildet ist, bei der die beiden Rollen durch einen aktivierten Rollenantrieb entlang des Dichtungsprofils bewegbar sind, wobei die Metallverstärkung zusammenpressbar ist, und bei der die Mitnehmerrolle auf dem mit dem Dichtungsprofil in Rollkontakt tretenden Teil seiner Außenfläche (12) über parallel zur Drehachse verlaufende Nuten (11) oder Rippen verfügt.

Weiterhin betrifft die Erfindung ein Dichtungsprofil aus einem elastischen Material, mit einem u-förmigen, eine Metallverstärkung (8) besitzenden Kanal (6), mit dem es auf einen Flansch (7) einer Karosserieöffnung aufsteckbar ist, wobei das Dichtungsprofil auf der dem Karosserieinneren (14) zugewandten Kanalaußenfläche (17) mit in Kanallängsrichtung ausgerichteten Rillen oder Rippen (17) versehen ist.

## Beschreibung

Die Erfindung betrifft ein Dichtungsprofil und eine Vorrichtung zu seiner Befestigung an einem Flansch.

Bei einem Kraftfahrzeug müssen diverse Dichtungsprofile an Karosserieflanschen befestigt werden, z. B. an den Fenster- und Türöffnungen. Derartige Dichtungsprofile besitzen meist einen u-förmigen, mit einer Metallverstärkung versehenen Kanal. Für die Befestigung des Dichtungsprofils wird in einem ersten Schritt das Dichtungsprofil mit diesem Kanal auf den Flansch aufgesteckt. In einem zweiten Schritt wird die innerhalb des Dichtungsprofils vorhandene Metallverstärkung derart von außen in Form gebogen, dass das Dichtungsprofil dauerhaft fest sitzt.

Der vorstehend genannte zweite Arbeitsschritt kann durch Rollformen erfolgen. In der Praxis sind hierfür Geräte bekannt, die über zwei Rollen verfügen, die links und rechts des Dichtungsprofils bzw. des Flansches platziert werden. Beide Rollen sind drehbar ausgeführt, wobei für eine der beiden Rollen, nachfolgend Antriebsrolle genannt, ein Rollenantrieb vorgesehen ist. Wegen ihrer Funktion zur Übertragung der Drehbewegung vom Rollenantrieb können die genannten Rollen auch als Antriebswelle bzw. hierzu korrespondierend als Mitnehmerwelle bezeichnet werden.

Wird der Rollenantrieb aktiviert, so wird die Antriebsrolle am Dichtungsprofil entlang geführt, wobei die zweite Rolle als Mitnehmerrolle auf der anderen Seite des Flansches mitrollt. Durch eine exakte gegenseitige Abstimmung des Abstands der beiden Rollen auf die Flanschbreite, der Geometrie der Rollen sowie der Stärke des Dichtungsprofils wird bei diesem Rollen die Metallverstärkung so zusammengequetscht, sodass das Dichtungsprofil mit optimaler Passung dauerhaft fest sitzt.

Im Einsatz solcher Rollformgeräte ist es erforderlich, für jeden Typ von Dichtungsprofil eine eigene Rolle zu entwickeln, um einen perfekten Sitz des Dichtungsprofils ohne jedwede Beschädigung zu gewährleisten. Eine Beschädigung des Dichtungsprofils kann sich dabei zum Beispiel dadurch ergeben, dass die Antriebsrolle durchdreht und das Dichtungsprofilmaterial bis auf das Metall durchgescheuert wird.

Es ist eine Aufgabe einer Ausführungsform der Erfindung, die Befestigung eines Dichtungsprofils mit dem oben genannten Rollformgerät derart zu verbessern, dass das Durchdrehen der beiden Rollen zuverlässig vermieden und bei optimaler Passung die Arbeitsgeschwindigkeit beim Befestigen eines Dichtungsprofils erhöht wird.

Die Lösung dieser Aufgabe erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft eine Vorrichtung zur dauerhaften Befestigung eines mit einer Metallverstärkung ausgestatteten Dichtungsprofils auf einen Flansch mittels Rollformen. Die Vorrichtung umfasst eine erste und eine zweite drehbare Rolle mit gemeinsamer Drehachse, bei der die Rollen auf beiden Seiten eines auf einen Flansch einer Karosserieöffnung aufgesteckten Dichtungsprofils positionierbar sind. Für die erste Rolle ist ein Rollenantrieb vorgesehen. Die zweite Rolle ist als Mitnehmerrolle ausgebildet. Die beiden Rollen sind durch einen Rollenantrieb entlang des Dichtungsprofils bewegbar, wobei die Metallverstärkung zusammenpressbar ist. Die Mitnehmerrolle verfügt auf dem mit dem Dichtungsprofil in Rollkontakt tretenden Teil seiner Außenfläche über parallel zur Drehachse verlaufende Nuten oder Rippen.

Ein zweiter Aspekt der Erfindung betrifft ein Dichtungsprofil aus einem elastischen Material, mit einem u-förmigen, eine Metallverstärkung besitzenden Kanal, mit dem es auf einen Flansch einer Karosserieöffnung aufsteckbar ist. Das Dichtungsprofil ist auf der dem Karosserieinneren zugewandten Kanalaußenfläche mit in Kanallängsrichtung ausgerichteten Rillen oder Rippen versehen.

Die genannte Vorrichtung ist gezielt auf das Dichtungsprofil des letzten Absatzes abgestimmt. Das Dichtungsprofil, dass meist im Weg des Extrusionsverfahrens hergestellt wird, ist hierbei bewusst nur geringfügig gegenüber einer Ausführungsform mit glatter Oberfläche abgewandelt. Auf diese Weise sollen der zusätzliche Aufwand bei der Herstellung eines extrudierten Dichtungsprofils minimiert und Zusatzkosten vermieden werden. Bei der praktischen Realisierung dieses Ansatzes wurden diese Anforderungen von einem Dichtungsprofil erfüllt, das in Längsrichtung Rippen oder Rillen aufwies. Für den Fall geschlossener Dichtungsprofile, wie sie beispielsweise für die Fenster- oder Türöffnungen verwendet werden, handelt es sich somit um umlaufende Rippen bzw. Rillen.

Mit diesem Dichtungsprofil mit Längsrillen oder -rippen ergab sich bei Versuchen ein sehr guter Halt der Mitnehmerrolle für den Fall, dass die Mitnehmerrolle über Nuten verfügte, die parallel zur Drehachse angeordnet waren. Auf diese Weise konnte ein Durchdrehen der Rollen zuverlässig verhindert werden und darüber ein Durchscheuern der Mitnehmerrolle bis auf den Metallflansch verhindert werden. Da die Vorrichtung über ihren Rollenantrieb die Arbeitsgeschwindigkeit vorgibt, mit der das Dichtungsprofil befestigt wird und dabei die Rollen weniger leicht durchdrehen, kann auf diese Weise die Arbeitsgeschwindigkeit für die Befestigung eines Dichtungsprofils gesteigert werden.

Weiterhin erlaubte die genannte Mitnehmerrolle die Verkleinerung des Rollenabstands. Die auf die Metallverstärkung im Dichtungsprofil wirkende Kraft fällt damit größer aus. Die Folge ist, dass der Abzugswert für das Dichtungsprofil größer ist und die Dichtung somit zuverlässiger am Flansch verbleibt.

Aus den obigen Ausführungen ergibt sich, dass für den Fall, dass die Mitnehmerrolle über Nuten verfügte, das Dichtungsprofil mit Rippen ausgestattet ist. Hat die Mitnehmerrolle Rillen, so ist das Dichtungsprofil mit Nuten ausgestattet.

In einer zweiten Ausführungsform der Vorrichtung besitzt diese einen pneumatischen Rollenantrieb. Bereitgestellte Druckluft ist mit Druckschwankungen verbunden, die beim Stand der Technik zu Druckspitzen und damit kurzfristig zu einer zu größeren Rollengeschwindigkeit führen konnte, die wiederum zu einem Durchscheuern des Dichtungsprofils bis auf den Metallflansch führen konnte. Eine Vorrichtung, die eine Mitnehmerrolle mit Rippen oder Nuten besitzt, zeigt kein derartiges Verhalten bei Druckschwankungen.

In einer weiteren Ausführungsform der Vorrichtung haben die Nuten oder Rippen eine Breite von ca. 3 mm. Die Tiefe kann weniger als 1 mm betragen, zum Beispiel 0.6 mm oder 0.4 mm. Korrespondierend hierzu bewährte sich beim Dichtungsprofil eine Wahl, bei der 8 Rillen oder Rippen vorgesehen sind, die auf der Kanalaußenfläche ein ca. 6 mm breites Band bilden.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: eine Prinzipskizze, die Befestigung des Dichtungsprofils auf einen Flansch zeigend,
- Fig. 2a: eine Mitnehmerrolle der Vorrichtung der Figur 2 in der Seitenansicht,
- Fig. 2b: die Mitnehmerrolle der Fig. 2b mit Blick in Längsrichtung,
- Fig. 3: ein Dichtungsprofil im Querschnitt.

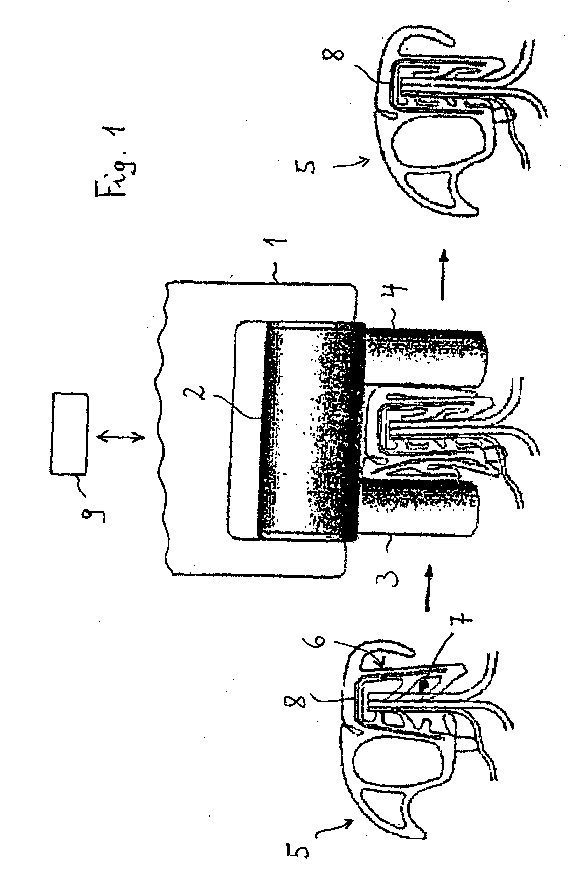

Bei den Figuren, die allgemein mit gleichen Bezugszeichen gleiche Gegenstände bezeichnen, zeigt Figur 1 eine Prinzipskizze zur Veranschaulichung, wie mit einer Vorrichtung zur dauerhaften Befestigung eines mit einer Metallverstärkung ausgestatteten Dichtungsprofils das besagte Dichtungsprofil dauerhaft am Flansch befestigt wird. Die Vorrichtung 1 besitzt in dieser Ausführungsformen drei Rollen 2, 3, 4, nämlich eine Rolle 2 mit horizontale Achse sowie zwei Rollen 3,4 mit vertikaler Achse. In einem ersten Schritt wird ein Dichtungsprofil 5 mit seinem u-förmigen Kanal 6 auf einen Flansch 7 aufgesteckt. Anschließend werden die beiden vertikalen Rollen 3, 4 links und rechts des Flansches 7 bzw. des Kanals 6 positioniert. Über einen Rollenantrieb 9 wird die Antriebsrolle 3 in eine Drehbewegung versetzt, wodurch sich die Vorrichtung 1 entlang des Dichtungsprofils 5 bzw. in Kanallängsrichtung (die senkrecht zur Figurenebene verläuft) bewegt. Hierbei wird das Dichtungsprofil 5 seitlich zusammengepresst und die Metallverstärkung 8 in Form gepresst. Das Ergebnis dieses Rollformprozesses zeigt der rechte Teil der Figur 1, bei dem die u-förmige Metallverstärkung 8 einen kleineren Öffnungswinkel aufweist als im linken Teil der Figur 1, die den Zustand des Dichtungsprofils 5 vor dem Rollformen zeigt.

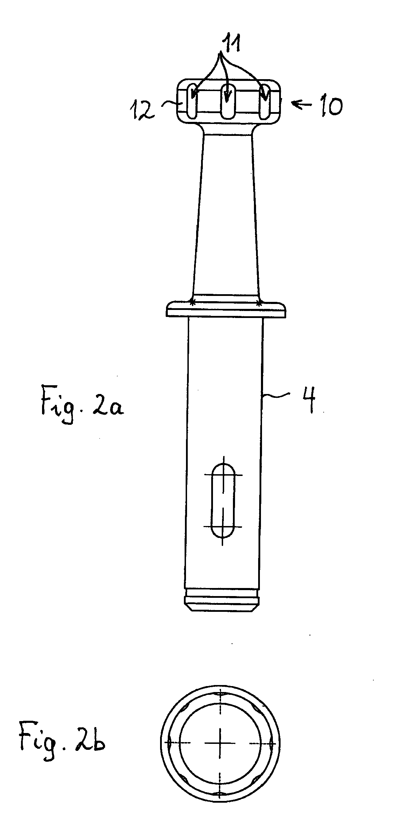

Figur 2a zeigt die Mitnehmerrolle 4 in einer Detailaufnahme im Maßstab 1:2. Man erkennt, dass der Kopf 10 über längliche Nuten 11 verfügt, die parallel zur Längsrichtung bzw. Symmetrieachse verlaufen. Mit der Außenfläche 12 dieses Kopfs 10 liegt die Mitnehmerrolle 4 beim Rollformen auf dem Dichtungsprofil 5 auf. Mit der Fig. 2b, die einen Schnitt durch die Mitnehmerrolle mit Blick in deren Symmetrierichtung im Maßstab 1:2 zeigt, ergibt sich, dass der Kopf 10 über 8 solcher Nuten verfügt. Die etwa 6 mm langen Nuten 11 sind äquidistant auf dem Umfang angeordnet. Sie haben eine Breite von ca. 3 mm bei einer Tiefe von ca. 0.4 mm.

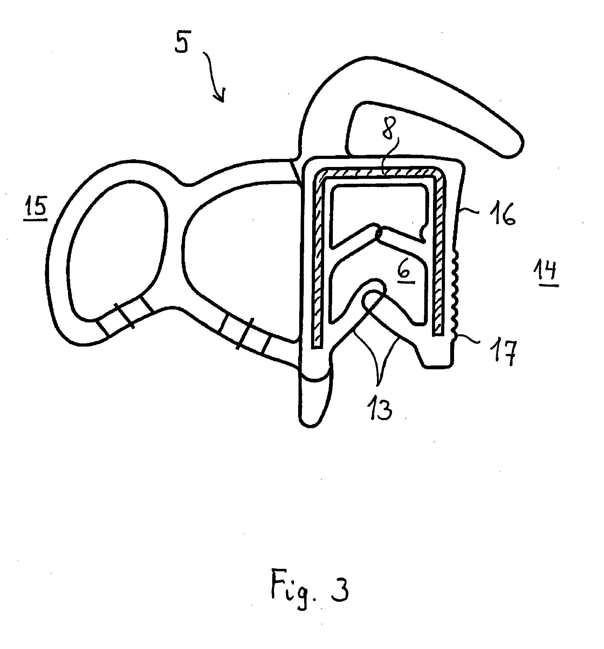

Figur 3 zeigt eine Ausführungsform eines Dichtungsprofils 5 in einem Schnitt quer zur Längsrichtung. Man erkennt den u-förmigen Kanal 6 zur Aufnahme eines Flansches 7 (nicht gezeigt), der mit Dichtlippen 13 ausgestattet ist. Der rechte Bereich des Dichtungsprofils 5 ist bei einem Karosserieflansch der Fahrzeuginnenseite 14 zugewandt, der linke Bereich der Fahrzeugaußenseite 15. Auf der der Fahrzeuginnenseite 14 zugewandten Kanalaußenseite 16 des Dichtungsprofils 5 sind Rippen 17 angeformt.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: Vorrichtung
- 02: Rolle
- 03: Rolle
- 04: Rolle
- 05: Dichtungsprofil
- 06: Kanal
- 07: Flansch
- 08: Metallverstärkung
- 09: Rollenantrieb
- 10: Kopf
- 11: Nut
- 12: Außenfläche
- 13: Dichtlippe
- 14: Fahrzeuginnenseite
- 15: Fahrzeugaußenseite
- 16: Kanalaußenfläche
- 17: Rippe

## Patentansprüche

1. Vorrichtung zur dauerhaften Befestigung eines mit einer Metallverstärkung (8) ausgestatteten Dichtungsprofils (5) auf einen Flansch (7) mittels Rollformens, umfassend eine erste und eine zweite drehbare Rolle (3,4) mit gemeinsamer Drehachse, bei der die Rollen auf beiden Seiten eines auf einen Flansch (7) einer Karosserieöffnung aufgesteckten Dichtungsprofils positionierbar sind, bei der für die erste Rolle (3) ein Rollenantrieb (9) vorgesehen ist und die zweite Rolle (4) als Mitnehmerrolle ausgebildet ist, bei der die beiden Rollen durch einen aktivierten Rollenantrieb entlang des Dichtungsprofils bewegbar sind, wobei die Metallverstärkung zusammenpressbar ist, und bei der die Mitnehmerrolle auf dem mit dem Dichtungsprofil in Rollkontakt tretenden Teil seiner Außenfläche (12) über parallel zur Drehachse verlaufende Nuten (11) oder Rippen verfügt.

2. Vorrichtung nach Anspruch 1, bei der ein pneumatischer Rollenantrieb vorgesehen ist.

3. Vorrichtung nach Anspruch 1 oder 2, bei der die Nuten oder Rippen eine Breite von ca. 3 mm haben.

4. Dichtungsprofil aus einem elastischen Material, mit einem u-förmigen, eine Metallverstärkung (8) besitzenden Kanal (6), mit dem es auf einen Flansch (7) einer Karosserieöffnung aufsteckbar ist, wobei das Dichtungsprofil auf der dem Karosserieinneren (14) zugewandten Kanalaußenfläche (17) mit in Kanallängsrichtung ausgerichteten Rillen oder Rippen (17) versehen ist.

5. Dichtungsprofil nach Anspruch 4, bei dem 8 Rillen oder Rippen vorgesehen sind, die auf der Kanalaußenfläche ein ca. 6 mm breites Band bilden.
